# FASCICULE DE BREVET EUROPEEN

(11) **EP 3 999 326 B1**
(45) Date de publication et mention de la délivrance du brevet: **06.05.2026**
(21) Numéro de dépôt: 20743272.5
(22) Date de dépôt: 17.06.2020
(51) Int. Cl.: B29C 70/08, B29C 70/16, B29D 99/00, D02G 3/36, D02G 3/44, B29C 70/44

(54) **PRODUIT COMPOSITE À PAROI MINCE RENFORCÉ PAR DES FILS HYBRIDES ET PROCÉDÉ DE FABRICATION D'UN TEL PRODUIT**
DURCH HYBRIDGARNE VERSTÄRKTES DÜNNWANDIGES VERBUNDPRODUKT UND VERFAHREN ZUR HERSTELLUNG EINES SOLCHEN PRODUKTS
THIN-WALLED COMPOSITE PRODUCT REINFORCED BY HYBRID YARNS AND METHOD FOR MANUFACTURING SUCH A PRODUCT

(30) Priorité: 16.07.2019 FR 1907991
(43) Date de publication de la demande: 25.05.2022
(73) Titulaire: Bcomp Ltd., 1700 Fribourg (CH)
(72) Inventeur: RION, Julien, 1687 Vuisternens-devant-Romont (CH); HEY, Vincent, 1700 Fribourg (CH); AEBISCHER, Reto, 1700 Fribourg (CH)
(74) Mandataire: P&TS SA (AG, Ltd.)
(86) Numéro de dépôt international: PCT/IB2020/055635
(87) Numéro de publication internationale: WO 2021/009581

(56) Documents cités:
- FR-A1- 3 073 167
- GB-A- 1 331 431

## Description

### Domaine de l'invention

La présente invention concerne un produit composite à paroi mince renforcé par des fils et le procédé de fabrication d'un tel produit composite.

Un tel produit composite forme notamment une portion d'un article tel que, de façon non limitative, une pièce de carrosserie automobile, notamment les portes, le toit, le capot, les ailes, l'aileron, le spoiler, le pare-chocs avant et arrière, les kits aérodynamiques, ou des pièces intérieures automobiles notamment les couvertures de portière, le tableau de bord, la console centrale, les habillages de pilier, les habillage de coffre, le pavillon, ou des articles de sport tels qu'une coque de canoé, kayak ou bateau léger, une tige de selle, une selle de bicyclette, un cadre de bicyclette, un guidon de bicyclette, une batte de baseball, une pagaie, un bâton de ski ou de marche ou encore un élément de mobilier, ou des pièces d'intérieur d'avion, notamment les panneaux latéraux, les panneaux de plafond, les coffres à bagage, ou des pièces aérodynamiques d'avion léger, notamment le capot moteur, les capots de roue, ou tout carénage aérodynamique d'un engin mobile.

Un tel produit composite peut revêtir une multitude de géométries, parmi lesquelles une feuille plane, une feuille non plane, et notamment une feuille avec une face convexe et une face concave, ou encore une feuille ondulée, une forme creuse tridimensionnelle, et notamment un tube creux de section circulaire, de section polygonale ou une autre forme, et notamment toute coque tridimensionnelle à paroi mince.

### Etat de la technique

Il existe différents agencements de produits composites à paroi mince renforcés, en l'occurrence un produit composite avec une matrice en matériau plastique parmi un polymère ou une résine et un renfort qui peut notamment se présenter comme une préforme avec des fils. Le produit présente une paroi mince ce qui signifie qu'il est en général au départ sous forme d'une feuille ou d'un panneau dont une des dimensions est bien plus petite (au moins 10 fois plus petite) que les deux autres.

Les matériaux composites sont utilisés depuis plus de 40 ans, en particulier pour des applications aéronautiques et spatiales, principalement en raison de leurs propriétés mécaniques spécifiques élevées. Depuis lors, le domaine de la recherche sur les matériaux composites a évolué, passant de la recherche initiale de propriétés spécifiques très élevées, dictée par les applications aérospatiales, à la nécessité de maintenir des propriétés élevées tout en réduisant le temps de fabrication et les coûts de production, grâce aux applications automobiles et autres applications à grande échelle, pour inclure récemment la nécessité d'intégrer des fonctionnalités supplémentaires dans la pièce composite. Ces dernières années, les composites à base de fibres naturelles ont fait l'objet d'une attention croissante en raison de la sensibilisation croissante à l'environnement. En raison de leur faible coût, de leur faible impact sur l'environnement et de leurs propriétés mécaniques spécifiques relativement élevées, les fibres naturelles apparaissent comme une nouvelle alternative aux fibres de verre ou de carbone comme renforcement dans les composites.

Le document US6805939 propose un matériau composite à paroi mince qui contient des fibres qui sont imprégnées de plastique, sous forme de deux réseaux au moins de câblés de fibres parallèles qui s'étendent dans des directions différentes et forment une bande, un treillis ou une grille. Les faisceaux de fibres peuvent être groupés en faisceau ou groupés en bande. Les fibres d'un premier réseau sont imprégnées de beaucoup plus de matière plastique que les fibres d'un second réseau. Le matériau composite est rigide dans la direction des fibres du premier réseau et est flexible transversalement à cette direction. Des ouvertures existent avantageusement entre les faisceaux de fibres.

Si l'on cherche à renforcer le produit à paroi mince en flexion, mais aussi en compression, il est connu de proposer des renforts en saillie en forme de réseau nervuré ou de grille comme dans WO2017099585 dans lequel on forme par moulage ces nervures au-dessus et/ou en dessous de la plaque de base.

On connait certains types de produits composites à paroi mince du document EP2648890, notamment avec des fils d'une première épaisseur et des fils d'une deuxième épaisseur plus grande que la première épaisseur et qui servent de renfort, ces fils de la deuxième épaisseur étant composés de fibres végétales torsadées, cette torsion apportant notamment une meilleure résistance à la compression de ces fils de la deuxième épaisseur.

Il existe des situations dans lesquelles ce type de produit composite présente un rapport entre les propriétés mécaniques par unité de poids et/ou coût par unité de poids pour des propriétés mécanique égales qui ne soit pas satisfaisant pour l'application recherchée.

FR3073167A1 prévoit de réaliser un produit composite qui comporte un pré-imprégné résultant d'une imprégnation asymétrique d'un treillis comportant des fils à base de fibres végétales, par saupoudrage de particules de polymères sur l'une des faces du treillis. On obtient un treillis de fils présentant une couverture de polymère qui est plus épaisse sur la face supérieure du treillis, ces fils étant eux même imprégnés avec ce polymère dans leur portion centrale à base de fibres végétales.

GB1331431A présente également un produit composite qui peut utiliser des fils avec une âme en fibre recouverte d'une matrice polymère.

### Bref résumé de l'invention

Un but de la présente invention est de proposer un produit composite à paroi mince renforcé par des fils formant un produit composite à paroi mince amélioré par rapport à l'état de la technique.

Un autre but est de fournir un produit composite à paroi mince renforcé par des fils qui présente un rapport propriétés mécaniques par unité de poids amélioré.

Un autre but est de fournir un produit composite à paroi mince renforcé par des fils qui présente un coût par unité de poids amélioré pour des propriétés mécanique par ailleurs au moins égales.

Le produit composite selon l'invention permet d'atteindre ces objectifs. Le produit composite selon l'invention est, selon la revendication 1, un produit composite à matrice organique, à paroi mince formant une feuille ou une coque tridimensionnelle, dont les fils de renfort comportent en effet des fils hybrides comportant une âme dans un premier matériau présentant une masse volumique inférieure à 1500 Kg/m³ et une couverture recouvrant l'âme, la couverture étant réalisées dans un deuxième matériau, ledit deuxième matériau étant différent du premier matériau et présentant un module de Young longitudinal en traction, selon l'axe du fil hybride, correspondant au module d'élasticité en traction Et déterminé par la pente de la courbe de contrainte/déformation σ(ε) dans l'intervalle entre les deux déformations ε1 = 0,05 % et ε2 = 0,25 %, supérieur à 25 GPa, et ledit produit composite présentant au moins une face nervurées, lesdites nervures étant créées au moins en partie par les fils hybrides.

On comprend que selon l'invention, par l'utilisation des fils hybrides, on peut disposer pour ces fils hybrides d'une âme (un cœur) plus légère et/ou moins chère que la couverture du fil hybride, avec une couverture présentant des propriétés mécaniques suffisantes pour permettre au fil hybride de procurer un renfort mécanique satisfaisant au produit composite qui le contient à l'emplacement de toutes les nervures ou d'une partie des nervures formées sur l'une au moins de ses faces. L'utilisation de ces fils hybrides permet également d'optimiser à la fois la résistance à la compression radiale nécessaire pour résister à la pression lors de la mise en œuvre et créer des nervures, cette résistance étant amenée essentiellement par l'âme du fil, et la rigidité et solidité longitudinale en flexion du fil, celle-ci étant amenée essentiellement par la couverture. On obtient ainsi un produit composite à matrice organique rigidifié par des fils comportant des fils hybrides.

Selon un premier type d'agencement possible selon l'invention, ledit produit composite comporte au moins une première couche, ladite première couche comprenant à la fois un premier type de fils (A) présentant une première épaisseur et un deuxième type de fils (B) présentant une deuxième épaisseur plus importante que la première épaisseur, ledit deuxième type de fils (B) étant constitué desdits fils hybrides. Ainsi, les nervures résultent de la surépaisseur créée par les fils hybrides par rapport au premier type de fils (A) dans la première couche, lesdits fils hybrides constituant ledit deuxième type de fils (B).

Selon un deuxième type d'agencement possible selon l'invention, ledit produit composite comporte au moins une première couche présentant une première épaisseur, ladite première couche étant recouverte d'une deuxième couche de fils, lesdits fils de la deuxième couche comprenant lesdits fils hybrides, les fils hybrides étant espacés afin de créer une surface nervurée. Dans cette deuxième couche, selon une possibilité, on utilise uniquement des fils hybrides : l'espacement entre les fils hybrides engendre à l'emplacement des fils hybrides une surépaisseur, sous forme de nervures, sur la face de la deuxième couche de fils tournée en direction opposée de la première couche.

Dans cette deuxième couche, selon une autre possibilité, on utilise à la fois des fils hybrides et un autre type de fil ou bien d'autres types de fils différent(s) des fils hybrides. Dans ce cas, différentes configurations peuvent exister pour la formation de nervures sur la face de la deuxième couche tournée en direction opposée de la première couche, une partie au moins des nervures résultant de la surépaisseur des fils hybrides par rapport à tout ou partie des autres fils de la deuxième couche et/ou de l'espacement entre les fils hybrides. Eventuellement, d'autres nervures peuvent exister et résulter de la surépaisseur de certains des autres fils (et non des fils hybrides) par rapport à une partie des autres fils de la deuxième couche et/ou de l'espacement entre certains des autres fils.

Selon une possibilité de l'invention, lesdits fils hybrides présentent une deuxième épaisseur plus importante que la première épaisseur de la première couche.

Selon un mode de réalisation, l'âme des fils hybrides est formée de fibres végétales parmi les fibres des végétaux suivants : lin, le chanvre, le sisal, le jute, l'abaca, le kenaf, la noix de coco, le coton, l'ortie, la ramie, le kapok, l'abaca, le henequen, l'ananas, le bananier, le palmier, le bois, ces fibres étant imprégnées d'une matrice organique sous forme d'un polymère

Selon un mode de réalisation, la couverture des fils hybrides est formée de fibres de carbone imprégnées d'une matrice organique sous forme d'un polymère.

Selon un mode de réalisation de l'invention, la matrice organique du produit composite est une matrice en matériau plastique parmi un polymère ou une résine, et notamment parmi un polymère thermodurcissable (en particulier une résine) et un polymère thermoplastique.

Selon un mode de réalisation de l'invention, le poids du fil hybride imprégné de la matrice organique est compris entre 500 et 15'000 tex (g/km), de préférence entre 1'000 et 10'000 tex, de préférence entre 2'000 et 8'000 tex.

Selon un mode de réalisation de l'invention, le poids du fil hybride (âme et couverture) non-encore imprégné de la matrice organique est compris entre 200 et 10'000 tex (g/km), de préférence entre 400 et 6'000 tex, de préférence entre 800 et 5'000 tex.

Selon un mode de réalisation de l'invention, le poids de la couverture du fil hybride représente entre 10-70% du poids du fil hybride, de préférence entre 20-60% du poids du fil hybride, de préférence entre 25-50% du poids du fil hybride considéré avant imprégnation par la matrice organique. Selon ce cas de figure, par voie de conséquence, le poids de l'âme représente entre 30 et 90% du poids du fil hybride considéré avant imprégnation par la matrice organique, de préférence entre 40 et 80% du poids du fil hybride, de préférence entre 50 et 75% du poids du fil hybride considéré avant imprégnation par la matrice organique.

Selon un mode de réalisation de l'invention, dans chaque fil hybride, la couverture est formée d'un ou de plusieurs rovings (une ou plusieurs mèches). Selon une possibilité, ce ou ces rovings forme(nt) un angle inférieur à 15° avec l'axe longitudinal du fil hybride, cet angle pouvant être nul, ou non nul et notamment compris entre 1° et 15°, y compris égal à ces valeurs limites.

La présente invention porte également, selon la revendication 23, sur le procédé de fabrication d'un produit composite à paroi mince tel que décrit précédemment, dans lequel les étapes suivantes sont mises en œuvre :
- fabrication d'une préforme comprenant des fils, lesdits fils comportant des fils hybrides, lesdits fils hybrides comportant une âme dans un premier matériau et une couverture recouvrant l'âme, la couverture étant réalisée dans un deuxième matériau différent du premier matériau,
- imprégner ladite préforme avec une matrice organique,
- appliquer une pression avec une membrane ou un tampon flexible sur un côté en relief de la préforme contre un moule,
- contrôler la température du moule de manière à solidifier ladite matrice organique, de manière à obtenir un produit solidifié dans lequel au moins une face externe forme des nervures créées au moins en partie par lesdits fils hybrides, dans lequel ledit premier matériau présente (après imprégnation par la matrice organique) une masse volumique inférieure à 1500 Kg/m³ et dans lequel ledit deuxième matériau présente (après imprégnation par la matrice organique) un module de Young longitudinal en traction, selon l'axe du fil hybride, correspondant au module d'élasticité en traction Et déterminé par la pente de la courbe de contrainte/déformation σ(ε) dans l'intervalle entre les deux déformations ε1 = 0,05 % et ε2 = 0,25 %, supérieur à 25 GPa.

### Brève description des figures

Des exemples de mise en œuvre de l'invention sont indiqués dans la description illustrée par les figures annexées dans lesquelles :
La Fig.1 représente un fil hybride utilisé dans le produit composite selon l'invention, schématiquement, en perspective et en semi transparence, sur la fig.1a, et selon différentes modalités de structure pour l'âme et la couverture sur les fig. 1b à 1d,
La Fig.2 représente schématiquement et en perspective, un agencement possible pour un non-tissé utilisant des fils hybrides pour former un produit composite selon l'invention,
La Fig.3 représente schématiquement et en perspective, un autre agencement possible pour un non-tissé utilisant des fils hybrides pour former un produit composite selon l'invention,
La Fig.4 représente schématiquement et en perspective, un autre agencement possible pour un non-tissé utilisant des fils hybrides pour former un produit composite selon l'invention,
La Fig.5 représente schématiquement et en perspective, un autre agencement possible pour un non-tissé utilisant des fils hybrides pour former un produit composite selon l'invention,
La Fig.6 représente schématiquement et en perspective, un autre agencement possible pour un non-tissé utilisant des fils hybrides pour former un produit composite selon l'invention,
La Fig.7 représente en perspective un autre produit composite selon l'invention,
La Fig.8 représente schématiquement certaines étapes d'une méthode de traitement et de consolidation permettant de fabriquer des feuilles nervurées selon l'invention,
La Fig.9 représente des exemples de tubes et de feuilles formant des produits composites à paroi mince selon l'invention et obtenus par le procédé de fabrication selon l'invention,
La Fig.10 représente d'autres exemples de tubes et de feuilles formant des produits composites à paroi mince selon l'invention et obtenus par le procédé de fabrication selon l'invention,
La Fig.11 représente un exemple de produit composite selon l'invention, formant un capot de véhicule automobile.

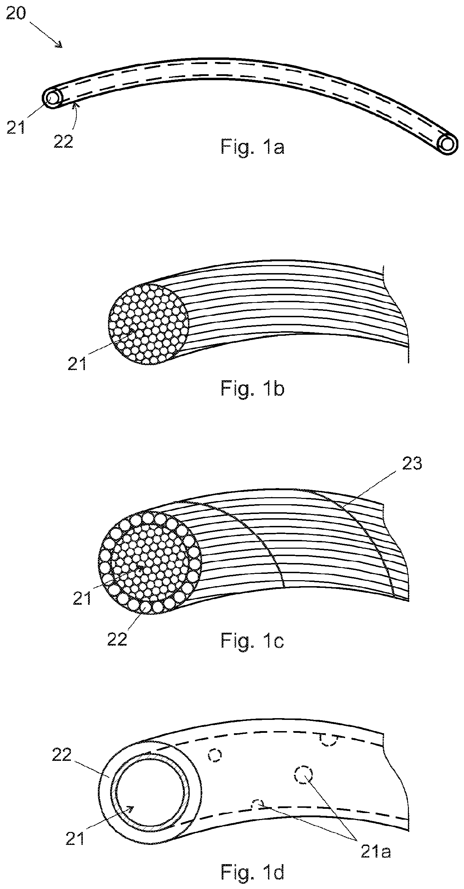

En référence à ces dessins, le produit composite comporte des fils hybrides représentés de façon schématique sur la figure 1a. Ces fils hybrides 20 comportent une âme 21 logée dans une couverture 22. L'âme 21 est réalisée dans un premier matériau différent du deuxième matériau constituant la couverture 22. Les fils hybrides 20 sont constitués de plusieurs matériaux afin de renforcer les propriétés mécaniques du composite dans lequel ils viennent s'insérer et ainsi également réduire son coût et/ou son poids. L'âme 21 du fil hybride 20 est faite d'un matériau léger et bon marché avec une bonne résistance à la compression radiale, tandis que la couche extérieure ou couverture 22 du fil hybride 20 est faite d'un matériau très résistant et plus rigide dans le sens longitudinal. Lorsque ce fil hybride 20 forme un renfort sous forme de relief et plus précisément de nervures faisant saillie à la surface de la structure nervurée du produit composite, c'est une portion des nervures la plus éloignée de la fibre neutre du fil hybride, qui supporte le plus de charges. Par conséquent, le fait d'avoir un deuxième matériau rigide/résistant sur la portion extérieure du fil (la couverture 22) augmente très efficacement les propriétés de flexion globale de la structure composite intégrant le fil hybride. Ainsi, le fait de recourir à un premier matériau moins résistant pour l'âme 21, ne grève pas les propriétés mécaniques globales du produit composite renforcé avec les fils hybrides 20.

Le premier matériau de l'âme 21 présente selon l'invention une masse volumique inférieure à 1500 Kg/m³, voire une masse volumique inférieure à 1350 Kg/m³, voire une masse volumique inférieure à 1200 Kg/m³ (cette masse volumique est caractérisée pour ce premier matériau en association avec la matrice organique l'imprégnant). Dans tous les cas, cette masse volumique est supérieure à 50 Kg/m³ et selon certains modes de réalisation cette masse volumique est supérieure à 150 Kg/m³, et dans certains modes de réalisation possibles, cette masse volumique est supérieure à 300 Kg/m³. S'agissant des propriétés de résistance mécaniques du premier matériau de l'âme 21, on ne recherche pas spécifiquement, même si c'est envisageable, des caractéristiques mécaniques de résistance (notamment en traction et en flexion) importantes, de sorte que par exemple un module de Young longitudinal inférieur à 25 GPa est possible (ce module de Young est caractérisé pour ce premier matériau en association avec une matrice organique). On recherche par contre une bonne résistance à l'écrasement radial du premier matériau (non encore imprégné de la matrice organique) de l'âme, afin de résister à la pression durant la mise en œuvre de la pièce. On cherchera typiquement à avoir pour ce premier matériau (pris seul) un écrasement de moins de 50% lors de la mise sous pression à 6 bars par un film plastique (procédé de mise en œuvre en autoclave).

Le deuxième matériau de la couverture 22 présente des caractéristiques mécaniques de résistance et de rigidité (notamment en traction et en flexion) importantes : ainsi, selon l'invention le deuxième matériau présente un module de Young longitudinal supérieur à 25 GPa (ce deuxième matériau étant pour cela caractérisé lorsqu'il est imprégné d'une matrice organique, et formant ainsi un composite formé de fibres et d'une matrice organique, ce module de Young correspondant donc au module de ce composite fibres+matrice organique dans le sens des fibres), voire supérieur à 50 GPa, voire supérieur à 100 GPa. Si l'on se rapporte à la caractérisation des fibres renforçant ce deuxième matériau, et donc pas du composite à matrice organique intégrant ces fibres à titre de renfort comme au-dessus, ces fibres peuvent présenter un module de Young longitudinal supérieur à 40 GPa, voire supérieur à 70 GPa, voire supérieur à 200GPa. La mesure du module de Young longitudinal s'effectue par un test en traction selon la norme DIN EN ISO 527 pour les plastiques et les matériaux composites. Selon cette norme, il s'agit du module d'élasticité en traction Et déterminé par la pente de la courbe de contrainte/déformation σ(ε) dans l'intervalle entre les deux déformations ε1 = 0,05 % et ε2 = 0,25 %.

Ces fils hybrides présentent deux parties distinctes et clairement identifiables séparément sous la forme de l'âme et de la couverture : en effet, l'âme et la couverture sont délimitées entre elles. Le premier matériau de l'âme est différent du deuxième matériau de la couverture. Cela signifie que le premier matériau et le deuxième matériau n'ont pas la même composition, et dans la plupart des cas que le premier matériau et le deuxième matériau ne présentent pas de composant commun, à savoir que le ou les composant(s) du premier matériau est (sont) différent(s) du ou des composant(s) du deuxième matériau. Différents modes de réalisation sont possibles pour de tels fils hybrides 20.

Selon un premier mode de réalisation des fils hybrides 20, l'âme 21 du fil hybride 20 comporte ou est constituée de fibres végétales telles que des fibres issues des plantes suivantes : lin, chanvre, sisal, jute, abaca, kenaf, noix de coco, coton, ortie, ramie, kapok, abaca, henequen, ananas, banane, palmier, et de fibres de bois. L'âme 21 du fil hybride 20 peut comprendre des fibres longues ou des fibres courtes ou à la fois des fibres longues et des fibres courtes de l'une parmi cette liste de plantes ou de plusieurs parmi cette liste de plantes. L'âme 21 du fil hybride 20 présente de préférence une torsion, et notamment une torsion élevée, pour bien résister à la compression radiale et conserver sa forme ronde pendant le traitement des produits composites. De préférence, les fibres végétales de l'âme 21 des fils hybrides 20 sont torsadées comme montré sur la fig. 1b, de sorte que l'angle formé par les fibres extérieures de l'âme 21 avec l'axe longitudinal du fil hybride 20 soit entre 10 et 45°, de préférence entre 12 et 40°, de préférence entre 15° et 35°.

Dans ce premier mode de réalisation, la couverture 22 est constituée de fibres de carbone, les fibres étant orientées dans le sens de la longueur (direction principale) du fil hybride 20 (voir la fig.1c) ou formant un angle avec la direction principale du fil hybride 20 qui est inférieur à 15°. Cette composition du fil hybride 20 présente l'avantage de présenter un revêtement (couverture 22) avec un matériau (deuxième matériau) très performant, avec des fibres alignées dans le sens de la charge, et un noyau (âme 21) avec un matériau (premier matériau) relativement léger, bon marché et qui présente une bonne résistance radiale à la compression. De plus, les fibres végétales comme le lin ayant un coefficient de dilatation thermique similaire à celui du carbone, ceci permet d'utiliser le fil hybride 20 selon le premier mode de réalisation sur une large gamme de température, sans contrainte thermique et sans déformation résiduelle.

Les fils hybrides étant constitués de fibres, imprégnées par une matrice polymère lors de la mise en œuvre du produit composite, il est nécessaire de lier l'âme à la couverture dans l'état non imprégné du fil hybride. Différentes possibilités existent pour fabriquer de tels fils hybrides 20, et notamment pour associer l'âme 21 à la couverture 22. On peut réaliser la couche de couverture 22 en appliquant une ou plusieurs mèches (ou stratifils ou rovings) sur l'âme 21 du fil hybride 20. Dans ce cas, dans chaque fil hybride 20, la couverture 22 est formée d'un ou de plusieurs rovings (une ou plusieurs mèches). Les mèches de la couverture 22 peuvent être collées avec l'âme 21 du fil hybride, ou peuvent être maintenues sur l'âme 21 du fil hybride du fil avec un petit fil de liaison 23 enroulé en hélice autour du fil hybride 20 (voir la fig.1c). Ce fil de liaison 23, enroulé en hélice autour de l'ensemble formé de l'âme 21 et de la couverture 22, permet également de conserver la section circulaire du fil hybride 20 pendant la fabrication puis l'utilisation du produit composite.

Alternativement, les mèches de la couverture 22 peuvent être tressées autour de l'âme 21 avec un angle très plat (angle faible compris entre 5 et 30°). Enfin, si le fil hybride 20 est pré-imprégné, l'assemblage des deux couches (couverture 22 et âme 21) du fil hybride 20 peut être réalisé pendant l'étape d'imprégnation. Par exemple, pour l'imprégnation avec une matrice thermodurcissable, notamment avec une résine comme l'époxy, l'âme 21 et le matériau de la couverture 22 sont trempés chacun dans un bain d'époxy, puis assemblés pendant l'étape de pré-polymérisation de la résine. En effet, la résine reste collante et molle et est complètement polymérisée ultérieurement par cuisson lors de la fabrication de la pièce composite qui permet le durcissement de la matrice. Si le produit ou la pièce composite est fabriqué(e) en utilisant la technique de l'imprégnation thermoplastique, l'âme 21 et la couverture 22 peuvent être assemblées dans l'outil (notamment l'outil de formage) avec le polymère fondu et être maintenues ensemble en forme pendant que le polymère refroidit. Ainsi, la résine ou le polymère sert de colle entre l'âme 21 et la couverture 22.

D'une façon générale, valable pour tous les modes de réalisation du fil hybride 20, dans chaque fil hybride 20, ladite âme 21 du fil hybride 20 est reliée à ladite couverture 22 du fil hybride 20. Aussi, une fois les fibres constituant le fil hybride imprégnées par la matrice organique et après polymérisation de la matrice, la matrice assure un lien entre le couverture et l'âme. On réalise ainsi la cohésion entre l'âme et la couverture du fil hybride 20.

Afin d'améliorer encore la résistance à la compression radiale pendant le traitement, les fibres végétales de l'âme 21 peuvent également être enrobées d'amidon ou d'un autre ciment naturel, et ce avant leur assemblage avec la couverture 22.

Selon un deuxième mode de réalisation des fils hybrides 20. le matériau de l'âme 21 est constitué de ou comporte des fibres végétales (comme dans le premier mode de réalisation), mais la couverture 22 est formée d'un ou de plusieurs rubans de fibres végétales de haute qualité. Ce ou ces rubans se présente(nt) sous formes de roving(s), mèche(s) ou stratifil(s) comportant essentiellement des fibres longues. Ainsi, la couverture des fils hybrides est formée de fibres végétales sous forme de rovings, lesdits rovings étant constitués de fibres végétales alignées formant un angle de moins de 5° (entre 0° et 5°) avec la direction longitudinale ou principale du roving, de sorte que le module de Young du roving imprégné d'une matrice organique, dans la direction longitudinale des rovings, est supérieur à 30 GPa, et de préférence supérieur à 32.5 GPa, et de préférence supérieur à 35 GPa. A noter que les rovings/rubans, formant la couverture 22, peuvent présenter un angle de 0 à 15° entre leur direction principale et la direction principale du fil hybride 20.

Cette solution a l'avantage d'être entièrement végétale, et utilise des fibres de haute qualité sur la couche extérieure (couverture) seulement du fil hybride, et une âme de fibres végétales bon marché, offrant ainsi le meilleur rapport performances/prix.

Selon un troisième mode de réalisation, les fils hybrides 20 comportent une âme 21 en polymère, ledit polymère appartenant au groupe comprenant le polyuréthane (PU), le polytéréphtalate d'éthylène (PET), l'acide polylactique (PLA), le polychlorure de vinyle (PVC), le polystyrène (PS), le polyméthacrylamide (PMI), et le copolymère styrène-acrylonitrile (SAN). Ce polymère peut se présenter sous différentes formes, parmi lesquelles sous forme de fil massique, d'un fil d'une mousse de polymère ou de fibres de polymère. Cette âme 21 en polymère est par exemple obtenue par extrusion, ce qui permet par exemple de lui conférer en section une forme prédéfinie, et par exemple une forme circulaire, elliptique, carrée, ou polygonale. La couverture 22 peut être en fibres de carbone, en fibres de verre ou en fibres végétales (pour ces fibres végétales, on préfère l'une parmi la liste suivante : lin, chanvre, sisal, jute, abaca, kenaf, ortie, ramie, kapok, abaca, henequen, ananas, banane, palmier, et de fibres de bois). Ce troisième mode de réalisation a l'avantage de fournir un fil hybride 20 qui présente une faible densité et offre ainsi un rapport performance/poids très élevé.

Selon un quatrième mode de réalisation, représentée à la fig.1d, l'âme 21 des fils hybrides 20 est un fil de polymère creux, tubulaire, dont la paroi présente des trous 21a. A titre d'exemple, le polymère de l'âme appartient à la liste suivante : PLA polymère polylactique, polyester PE, polyamide PA, polychlorure de vinyle PVC, polystyrène PS, CP (cellulose proprionate) ou CAP (Acétopropionate de cellulose), ou CAB (acétobutyrate de cellulose). Ce fil hybride 20 a l'avantage d'agir comme milieu d'écoulement pour les procédés de moulage par infusion sous vide de résine, la résine étant capable de s'écouler rapidement par le passage central du tube de polymère formant l'âme 21 et ensuite de s'écouler par les trous 21a de la paroi du tube de polymère formant l'âme 21 pendant l'infusion, imprégnant ainsi la couverture 22 du fil hybride 20 et les fibres adjacentes (couverture 22 des fils hybrides 20 adjacents ainsi que les éventuels fils (A) adjacents et/ou la ou les éventuelle(s) couche(s) inférieure(s)). Aussi, le passage interne du tube de polymère formant l'âme 21 ainsi que les trous 21a dans les parois du tube de polymère étant remplis de résine, cela permet de former un ancrage mécanique des couches présentes autour du tube de polymère formant l'âme 21 lors de la fabrication du produit composite 30.

La couverture 22 peut être, comme dans le cas du troisième mode de réalisation, en fibres de carbone, en fibres de verre ou en fibres végétales.

Selon un cinquième mode de réalisation, les fils hybrides 20 comprennent une âme 21 qui est en fibres d'aramide, ou en fibres de polyéthylène de masse molaire très élevée (UHMPE) étirées, ou en fibres thermoplastique étirées. A titre d'exemple, ces fibres sont en Kevlar (marque déposée), Twaron (marque déposée), Dyneema (marque déposée). Les fils hybrides 20 de ce cinquième mode de réalisation comprennent une couverture 22 en fibres de carbone, ce qui permet d'apporter résistance et rigidité au fil hybride 20. De préférence, les fibres de l'âme 21 sont torsadées ou tressées entre elles, ainsi afin d'offrir une bonne résistance à la compression radiale au fil hybride 20. Ce cinquième mode de réalisation permet d'apporter une très haute rigidité en flexion aux produits composites et aux pièces utilisant ce fil hybride 20 à titre de renfort, tout en ayant des performances très avantageuses en cas de crash. Si une grille de renfort est formée avec ces fils hybrides 20 qui présente un cœur à haute ténacité, on évite en effet la formation de fragments en cas de crash, les fibres à haute ténacité maintenant toutes les parties de la structure même fortement endommagée en un seul morceau.

Les modes d'assemblage possibles entre la couverture 22 et l'âme 21 des fils hybrides du deuxième mode de réalisation, du troisième mode de réalisation, du quatrième mode de réalisation et du cinquième mode de réalisation sont analogues à ceux décrits précédemment en relation avec le premier mode de réalisation.

Selon un exemple de réalisation, l'âme 21 du fil hybride 20 est en lin est la couverture 22 du fil hybride 20 est en fibres de carbone.

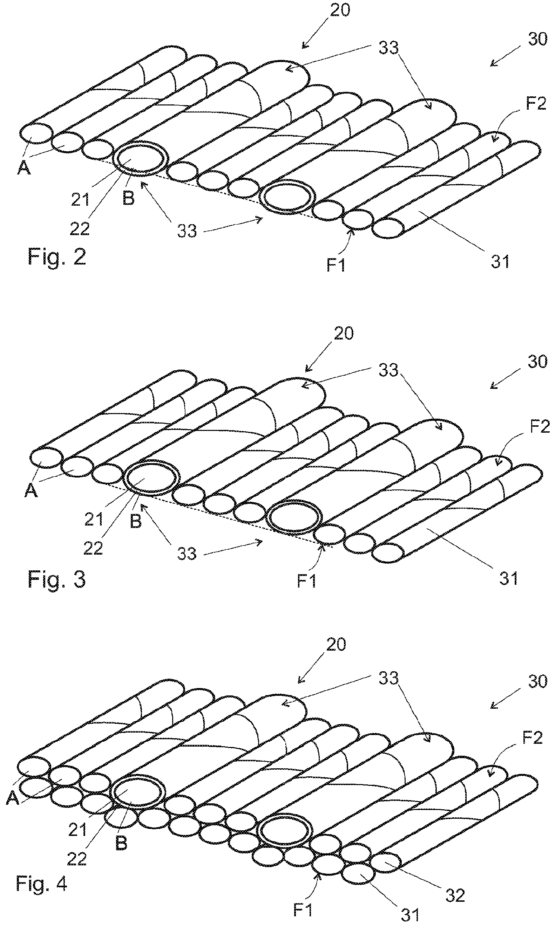

Les figures 2 à 6 montrent les schémas des préimprégnés en feuille qui servent de base pour la fabrication de produits composites selon l'invention, incorporant deux diamètres de fils différents (A) et (B).

On se reporte aux figures 2 et 3 qui représentent deux variantes d'un premier type d'agencement possible pour le produit composite 30. Dans ce premier type d'agencement, le produit composite 30 comporte au moins une première couche 31, ladite première couche 31 comprenant à la fois un premier type de fils (A) présentant une première épaisseur et un deuxième type de fils (B) présentant une deuxième épaisseur plus importante que la première épaisseur, ledit deuxième type de fils (B) étant constitué de fils hybrides 20 tels que décrits précédemment. Dans le cas représenté sur les figures 2 et 3, le produit composite 30 comporte une seule et unique couche de fil formée de la première couche 31 mais dans des cas non représentés, le produit composite 30 peut comporter cette première couche 31 et une autre ou plusieurs autres couches en empilement avec cette première couche 31.

Dans les variantes des figures 2 et 3, les fils B plus épais sont cousus dans la même première couche 31 de fils que les fils A plus fins, tous les fils A et B étant parallèles entre eux, alors que l'ordre dans lequel les fils plus épais B sont placés peut ou non se répéter régulièrement.

Dans la variante de la figure 2, cette première couche 31 présente deux faces F1 et F2 qui sont non planes car les fils hybrides B étant plus épais que les fils A, ils forment des nervures 33 sur les deux faces.

Dans la variante de la figure 3, le produit composite 30 comprend une seule couche 31 avec des fils A d'un premier diamètre et des deuxièmes fils B d'un diamètre supérieur formés des fils hybrides 20 ; cependant, une des deux faces (la face F1, qui est la face inférieure dans cet exemple) comprend les fils A et B qui sont affleurants entre eux, ce qui donne une surface plane pour la face F1. Cette face plane F1 peut être obtenue par exemple en pressant le préimprégné en feuille contre la face plane d'un moule. L'autre face F2 de cette couche 31 (la face supérieure dans cet exemple) comprend des nervures 33 résultant des fils B ou fils hybrides.

On se reporte aux figures 4 à 7 qui représentent trois variantes d'un deuxième type d'agencement possible pour le produit composite 30. Dans ce deuxième type d'agencement, le produit composite 30 comporte au moins une première couche 31 de fils présentant une première épaisseur, et une deuxième couche 32 de fils recouvrant la première couche 31, lesdits fils de la deuxième couche 32 comprenant des fils hybrides 20 tels que décrits précédemment, les fils hybrides 20 étant espacés entre eux afin de créer une surface nervurées pour le produit composite 30, par le fait que les nervures 33 découlent de la surépaisseur engendrée par les fils hybrides 20 (fils B) sur la face F2 du produit composite 30 opposée à celle (face F1) portant la première couche 31.

Dans la première variante de la figure 4, le produit composite 30 comprend une première couche 31 de fils A fins parallèles et attenants entre eux deux à deux. Cette première couche 31 est superposée sur ou sous une face non plane d'une deuxième couche 32 configurée comme la couche unique du produit composite 30 de la figure 2 , ce qui donne un produit composite 30 avec au moins un côté qui est non plat et qui forme des nervures 33 (face F2). Dans le cas particulier de la figure 4, le produit composite 30 comporte deux faces (F1 et F2) avec des nervures 33 à l'emplacement des fils B ou fils hybrides. La première couche 31 est de préférence constituée de fils A ayant tous le même diamètre ; elle peut être cousue sur la deuxième couche 32, ou collée avec de la résine ou avec le polymère du produit composite 30.

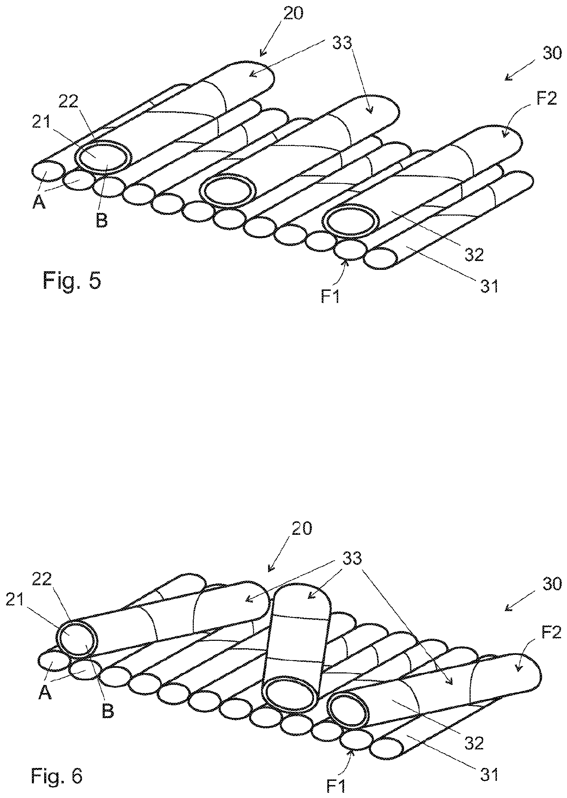

Dans la deuxième variante de la figure 5, le produit composite 30 comprend des fils épais B espacés formés des fils hybrides 20 et constituant une deuxième couche 32, qui sont cousus (ou maintenus en place par d'autres techniques, p. ex. collés, obtenus directement par tissage, tricotage, tressage ou tout autre procédé connu de fabrication textile) sur une première couche 31 de fils A plus fins et à alignement dense (tous les fils A sont parallèles entre eux et en contact avec les deux fils A voisins). La deuxième couche 32 (couche supérieure sur la figure 5) peut être faite de fils B qui sont d'épaisseur égale ou d'épaisseur supérieure à celle des fils A de la première couche 31 (couche de base formée d'une couche inférieure sur la figure 5, et qui définit une face F1 plane), la deuxième couche 32 définissant une face F2 du produit composite 30 avec des nervures 33. En plus du diamètre du fil, les fibres utilisées dans chacun des fils A et B peuvent différer, par exemple en utilisant un type de fibres dans les fils A fins et un deuxième type de fibres dans les fils B plus épais, à savoir dans l'âme 21 et/ou la couverture 22 de ces fils B. L'angle entre les fils B de la deuxième couche 32 peut également varier (angle de 0° pour des fils B parallèles entre eux sur la figure 5).

Dans la première variante représentée sur la figure 4 et dans la deuxième variante représentée sur la figure 5, les fils B de la deuxième couche 32 sont parallèles aux fils A de la première couche 31 et dans la troisième variante de la figure 6, les fils B de la deuxième couche 32 ne sont pas parallèles avec les fils A de la première couche 31 mais se croisent avec la direction des fils A de la première couche 31. L'angle entre les fils B de la deuxième couche 32 et les fils A de la première couche 31 peut varier de quelques degrés (2 ou 3)° (fils B sensiblement parallèles aux fils A de la première couche 31) à 90° (fils B perpendiculaires aux fils A de la première couche 31). Egalement, dans le cas de la figure 6, les fils B de la deuxième couche 32 se croisent entre eux, tout en croisant avec la direction des fils de la première couche 31. De plus, il est possible d'avoir une préforme en feuille comprenant des fils de plus de deux diamètres différents et/ou plus de deux types, et/ou plus de deux angles.

Ces tissus ou préforme en feuille peuvent être obtenus en une seule étape, en utilisant des fils d'une ou de différentes épaisseurs en conjonction avec des équipements de fabrication textile, en transformant lesdits fils pour aboutir à l'architecture textile finale, où certains des fils sont placés de manière à construire les nervures 33 une fois le textile transformé pour former la pièce composite finale ou un produit composite. Alternativement, un type de fils ou une grille de fils (comprenant ou constitué de fils hybrides 20) est placé sur une armure standard, un tissu ou un non-tissé constitué du même type ou d'un type différent de fils, ou un mat de fibres, lequel forme une première couche de support obtenue dans une étape précédente. D'autres méthodes peuvent être utilisées pour obtenir ces tissus, comme le tissage, le tricotage, le tressage et la couture pour fabriquer des tissus ou des non-tissés. Alternativement, les fils peuvent être maintenus ensemble par un polymère, soit une résine thermodurcissable durcie dans l'étape suivante de procédé, soit un polymère dissous ou fondu avant l'imprégnation du tissu ou plus généralement de la première couche de support.

Dans le cas de la première couche 31 de la figure 2 ou de la deuxième couche 32 de la figure 4, qui comporte à la fois des fils hybrides 20 (fils B) et d'autres fils de plus petite épaisseur (fils A), de nombreux exemples de séquences de fils sont possibles, telles que AAABAAAAABAAA, AABAABAAA, AABAABAA, ABABABABA, AAAABAABAAAA, AABAACAABAAC, où A, B et C représentent différents diamètres de fils et le fil B étant un fil hybride 20, et où ces séquences peuvent se répéter aussi souvent que nécessaire pour répondre aux besoins spécifiques de la pièce finale, et où toute séquence imaginable d'au moins deux diamètres différents est incluse dans la présente invention. Au-delà de ces exemples, d'autres types de combinaisons, y compris des séquences non répétitives, des combinaisons des séquences ci-dessus ou des combinaisons de plus de deux types de fils différents peuvent être utilisés. Outre l'épaisseur, le type de fibres peut également varier d'un type de fil à l'autre.

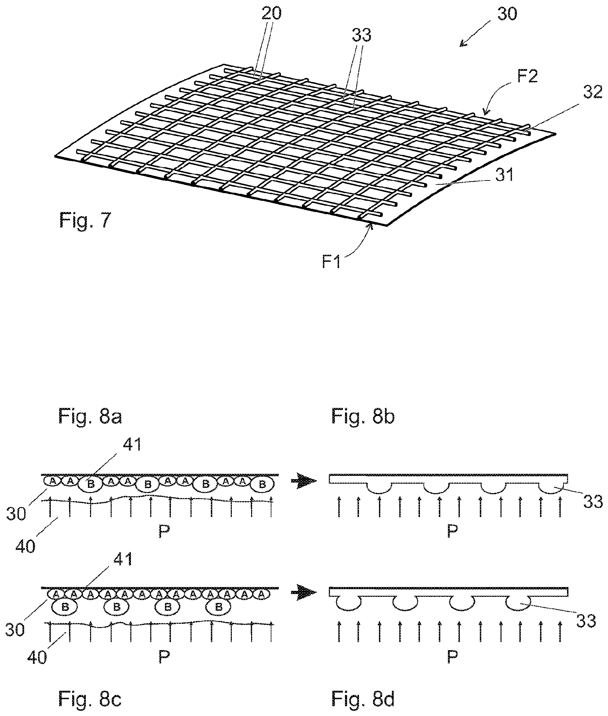

Si l'on se reporte à la Fig. 7, un produit composite 30 comporte une première couche 31 superposée avec une deuxième couche 32 formant une grille de fils hybrides 20. Plus précisément, cette deuxième couche 32 comporte des fils hybrides 20 distribués entre une première série de fils hybrides 20 parallèles entre eux et une deuxième série de fils hybrides 20 parallèles entre eux, la direction de la première série formant avec la direction de la deuxième série un angle compris entre 30° et 90° pour former une grille à maille en forme de quadrilatère (90° sur la figure 7 ou la deuxième couche 32 est une grille à mailles rectangulaire de fils hybrides 20).

Dans le cas de la fig. 7, mais aussi dans le cas des agencements des figs. 4 à 6, la première couche 31 appartient par exemple au groupe comprenant un tissu (notamment un tissu de fils de lin, ou de fibres de carbone) ou un mat de fibres végétales, de fibres de carbone, de fibres de verre ou de fibres de polymère, une feuille de métal, une feuille d'aluminium, et une feuille de polymère.

Il ressort de ce qui précède que les fils hybrides 20 (fils B) sont possiblement disposés dans la première couche 31 ou dans la deuxième couche 32 parallèlement entre eux selon une seule direction ou bien selon seulement deux directions, ou bien selon seulement trois directions ou bien selon seulement quatre directions.

Selon une disposition possible, le fil hybride 20 est présent dans le produit composite 30 à hauteur d'au moins 5% en poids de renfort parallèle ou d'au moins 10% en poids de renfort croisé.

Selon une disposition possible, correspondant aux agencements des figures 3, 5, 6 et 7, le produit composite 30 comporte une face nervurée et une face plane.

La figure 8 montre une illustration des étapes de traitement et de consolidation dans le cas d'un produit composite 30 avec une surface plane (à une seule couche sur les figs. 8a et 8b, et à deux couches sur les figs. 8c et 8d). La préforme 30 est pressée contre un moule rigide 41. Lorsque les fils A et B de la préforme 30 forment un tissu sec, une imprégnation avec une résine thermoplastique ou thermodurcissable est initiée et réalisée avant, pendant ou juste après l'augmentation de pression. La pression peut être appliquée à l'aide d'une membrane souple 40 ou un tampon flexible (qui n'a pas besoin d'être une vessie gonflable, bien que cela soit possible) d'un côté et en appliquant une pression P à cette membrane souple 40 (figs. 8a et 8c). La membrane flexible 40 s'adapte au tissu d'épaisseur variable. La température du moule 41 est ensuite augmentée pour (i) diminuer la viscosité du polymère et optimiser l'imprégnation des fibres, et (ii) consolider la pièce par réticulation de la résine thermodurcie. Dans le cas d'une matrice thermoplastique, la consolidation se produit après chauffage lorsque la température est réduite à une température inférieure à la température de transition vitreuse du polymère. La méthode peut également s'appliquer à des surfaces courbes simples ou doubles. Le produit composite obtenu (figs. 8b et 8d) comporte des nervures 33 à l'emplacement des fils hybrides 20 (fils B).

Dans le cas de formes plates ou courbes, les deux côtés du moule 41 peuvent être rigides (métalliques, par exemple), une surface du moule 41 contenant des rainures usinées sur la surface, correspondant au négatif des fils B (ou des fils A et B) correspondants placés sur la surface de la préforme composite 30. Les rainures du moule 41 servent alors de guides pour placer avec précision la préforme dans le moule 40, avant que le moule ne soit fermé et que le composite ne durcisse comme décrit ci-dessus.

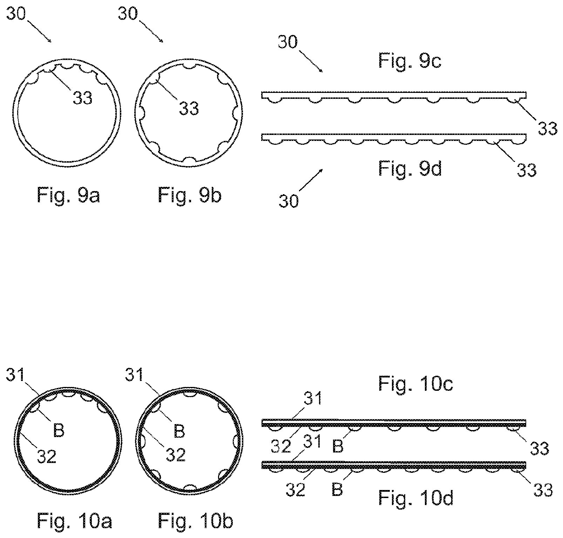

Des exemples de produit composites 30, sous formes de tubes et de feuilles en fibres composites obtenus à partir de la technologie présentée sont présentés aux figures 9a à 9d. Les raidisseurs résultants des nervures 33 peuvent être soit (Fig. 9a) placés localement dans certaines parties de la section de tube, soit (Fig. 9b) uniformément sur la circonférence de la section de tube, en fonction des besoins structurels et des exigences de rigidité de la pièce finale. Des exemples de différentes densités de raidisseurs résultants des nervures 33 dans les feuilles plates sont donnés dans les Fig. 9c et 9d. Des facteurs tels que l'espace entre les nervures 33, la régularité de la séquence des nervures 33, le type de fibres utilisées dans les nervures 33, leur orientation et leur épaisseur peuvent être appliqués à toutes les formes, y compris les pièces creuses à section fermée, les feuilles plates et les surfaces courbes simples ou doubles. De plus, les nervures 33 peuvent fonctionner sous n'importe quel angle et peuvent également se croiser si plusieurs directions doivent être renforcées. Un exemple concret de cette dernière est un tube avec des raidisseurs s'étendant à ±45° par rapport à l'axe longitudinal, pour augmenter la résistance au flambement et à l'effondrement de la section. Toutes les variables possibles, à savoir la régularité de la séquence des nervures 33, la répartition des nervures 33, le ou les type(s) de fibres utilisées dans les nervures 33, leur épaisseur ou même leur angle, peuvent être appliquées à toutes les formes, y compris les tubes, les feuilles plates et les surfaces courbes simples ou doubles.

La figure 10 montre des exemples de tubes et de feuilles en matériau composite obtenus à partir de la technologie exposée dans la présente demande, qui combinent au moins deux types différents de matériaux fibreux. Dans les figures 10a et 10b, les tubes sont composés d'un empilement de couches avec une première couche 31 à l'extérieur, et d'un matériau différent formé d'une deuxième couche 32 à l'intérieur du tube, tandis que les nervures 33 de la deuxième couche sont sur la face interne des tubes. Il en va de même pour les feuilles plates (Fig. 10c et 10d), ou pour toute autre surface courbe simple ou double. Cette approche peut être utilisée pour les pièces composites ayant des exigences d'amortissement élevées. L'extérieur du tube peut alors être fait d'un matériau avec un module de stockage E' significativement plus élevé que le module de stockage que la deuxième couche 32, qui a au contraire un module de perte E‴ significativement plus élevé. (donc capacité d'amortissement) par rapport au matériau de la couche externe 31.

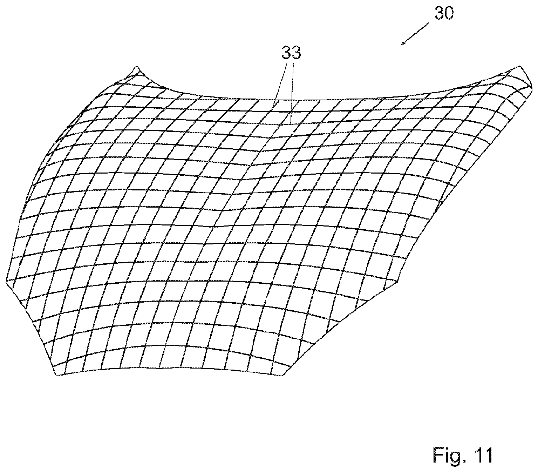

La figure 11 illustre un mode de réalisation d'un produit selon l'invention. Le produit composite 30 dans cet exemple est un capot de voiture de sport. Un capot de voiture de sport doit principalement résister aux charges de flexion résultant des pressions aérodynamiques à haute vitesse et doit être aussi léger que possible. Aussi, seule la face extérieure du capot lorsqu'il est monté sur un véhicule, se doit d'être lisse.

En utilisant la technologie divulguée, on peut concevoir un capot de voiture de sport avec un rapport poids/performance optimal fait d'un produit composite 30 utilisant par exemple des fibres naturelles et des fibres de carbone. Selon une possibilité, la couche supérieure de la feuille est constituée d'un stratifié (plusieurs couches de stratifié) avec des couches de fibres orientées à 0°, à ±45° et à 90° à l'axe. Les nervures 33 placées du côté concave de la feuille sont orientées à 0° et 90° pour résister aux charges de flexion dues à la pression de surface (ces nervures 33 sont placées sur la face arrière de la feuille sur la vue de la figure 11, et sont donc vues par transparence sur cette figure 11).

Un schéma du concept est illustré à la figure 11. Le composite est composé de préférence d'une part d'une combinaison de fibres de lin et de fibres de carbone et d'autre part soit d'une résine thermodurcissable (telle que l'époxy), soit d'un polymère thermoplastique tel que Poly(acide lactique) (PLA), Poly(propylène) (PP), ou tout type de Poly(amide) (PA). L'épaisseur de la paroi extérieure (première couche 31) et des nervures 33 à l'intérieur varie entre 0,5 et 3 mm, respectivement.

Le capot de voiture de sport conçu à l'aide de la présente invention offre une combinaison optimale pour une conception structurelle avec une quantité minimale de matériau (donc de poids).

Alternativement, le capot de voiture de sport peut être réalisé en utilisant à titre de fil hybride une âme 21 et une couverture 22 toutes les deux formées uniquement en fibres de lin sous des formes différentes, ce qui constitue un premier matériau pour l'âme 21 et un deuxième matériau, différent du premier matériau, pour la couverture 22 : par exemple le premier matériau est formé de fibres de lin courtes traitées pour former un fil avec une torsion importante (l'angle entre les fibres extérieures du fil et l'axe du fil est de préférence compris entre 10° et 45°, de préférence compris entre 12° et 40°, et de préférence compris entre 15° et 35°, en incluant ces valeurs limites, et selon une possibilité cet angle est supérieur ou égal à 15°) et le deuxième matériau est formé de fibres de lin longues sous forme de rovings. Dans ce cas, en utilisant des fils hybrides uniquement faits de fibres végétales dans l'âme 21 et la couverture 22, on obtient des performances optimales tout en utilisant des matériaux bio-sourcés.

### Numéros de référence employés sur les figures

- 20: Fil hybride
- 21: Âme
- 21a: Trous
- 22: Couverture
- 23: Fil de liaison
- 30: Produit composite
- 31: Première couche
- 32: Deuxième couche
- 33: Nervures
- 40: Membrane souple
- 41: Moule
- F1: Face du produit composite
- F2: Face du produit composite

## Revendications

1. Produit composite (30) à matrice organique et à paroi mince formant une feuille ou une coque tridimensionnelle, renforcé par des fils, les fils comportant des fils hybrides (20), lesdits fils hybrides (20) comportant une âme (21) dans un premier matériau présentant une masse volumique inférieure à 1500 Kg/m3 et une couverture (22) recouvrant l'âme (21), la couverture (22) étant réalisée dans un deuxième matériau, ledit deuxième matériau étant différent du premier matériau, dans lequel ledit deuxième matériau présente un module de Young longitudinal en traction, selon l'axe du fil hybride (20), correspondant au module d'élasticité en traction Et déterminé par la pente de la courbe de contrainte/déformation σ(ε) dans l'intervalle entre les deux déformations ε1 = 0,05 % et ε2 = 0,25 %, supérieur à 25 GPa, et dans lequel ledit produit présente au moins une face nervurée, lesdites nervures (33) étant créées au moins en partie par les fils hybrides (20).

2. Produit composite (30) renforcé par des fils hybrides selon la revendication 1, comportant au moins une première couche, ladite première couche comprenant à la fois un premier type de fils (A) présentant une première épaisseur et un deuxième type de fils (B) présentant une deuxième épaisseur plus importante que la première épaisseur, ledit deuxième type de fils (B) étant constitué desdits fils hybrides (20).

3. Produit composite (30) renforcé par des fils hybrides selon la revendication 1, comportant au moins une première couche présentant une première épaisseur, ladite première couche étant recouverte d'une deuxième couche de fils, lesdits fils de la deuxième couche comprenant lesdits fils hybrides (20), les fils hybrides (20) étant espacés afin de créer une surface nervurée.

4. Produit composite (30) selon la revendication précédente, dans lequel lesdits fils hybrides (20) sont disposés dans la deuxième couche parallèlement entre eux selon une seule direction ou bien selon seulement deux, trois ou quatre directions.

5. Produit composite (30) selon la revendication 3 ou la revendication 4, dans lequel lesdits fils hybrides (20) présentent une deuxième épaisseur plus importante que la première épaisseur de la première couche.

6. Produit composite (30) selon l'une des revendications 1 à 5 **caractérisé en ce qu'**il comporte une face nervurée et une face plane.

7. Produit composite (30) selon l'une des revendications 1 à 6, **caractérisé en ce que** dans chaque fil hybride (20), ladite couverture (22) est formée d'un ou de plusieurs rovings.

8. Produit composite (30) selon l'une des revendications 1 à 7, **caractérisé en ce que** dans chaque fil hybride (20), ladite âme (21) du fil hybride est reliée à ladite couverture du fil hybride (20).

9. Produit composite (30) selon la revendication précédente, dans lequel l'âme (21) des fils hybrides (20) est formée de fibres végétales parmi les fibres des végétaux suivants : lin, le chanvre, le sisal, le jute, l'abaca, le kenaf, la noix de coco, le coton, l'ortie, la ramie, le kapok, l'abaca, le henequen, l'ananas, le bananier, le palmier, le bois.

10. Produit composite (30) selon la revendication 9, dans lequel les fibres végétales de l'âme (21) des fils hybrides (20) sont torsadées, de sorte que l'angle formé par les fibres extérieures de l'âme avec l'axe longitudinal du fil hybride (20) soit entre 10 et 45°, de préférence entre 12 et 40°, de préférence entre 15° et 35°.

11. Produit composite (30) selon la revendication 9, dans lequel les fibres végétales de l'âme (21) des fils hybrides (20) sont enrobées d'amidon ou d'un autre ciment naturel.

12. Produit composite (30) selon l'une des revendications 9 à 11, dans lequel la couverture (22) des fils hybrides (20) est formée de fibres de carbone.

13. Produit composite (30) selon l'une des revendications 9 à 11, dans lequel la couverture (22) des fils hybrides (20) est formée de fibres végétales sous forme de rovings, lesdits rovings étant constitués de fibres végétales alignées formant un angle de moins de 5° avec la direction longitudinale du roving, de sorte que le module de Young dans la direction longitudinale des rovings du roving imprégné d'une matrice organique, correspondant au module d'élasticité en traction Et déterminé par la pente de la courbe de contrainte/déformation σ(ε) dans l'intervalle entre les deux déformations ε1 = 0,05 % et ε2 = 0,25 %, est supérieur à 30 GPa.

14. Produit composite (30) selon l'une des revendications 1 à 8, **caractérisé en ce que** l'âme (21) des fils hybrides (20) est en polymère, ledit polymère appartenant au groupe comprenant le polyuréthane PU, le polytéréphtalate d'éthylène PET, l' acide polylactique PLA, le polychlorure de vinyle PVC, le polystyrène PS, le polyméthacrylamide PMI et le copolymère styrène-acrylonitrile SAN.

15. Produit composite (30) selon l'une des revendications 1 à 8 et 14, **caractérisé en ce que** l'âme (21) est un fil de polymère creux, tubulaire, dont la paroi présente des trous (21a).

16. Produit composite (30) selon l'une des revendications 14 à 15, **caractérisé en ce que** la couverture (22) des fils hybrides (20) est en fibres de carbone, fibres de verre ou en fibres végétales.

17. Produit composite (30) selon l'une des revendications 1 à 13, 15 et 16, **caractérisé en ce que** l'âme (21) est en fibres d'aramides ou en fibres de polyéthylène de masse molaire très élevée UHMPE étirées ou en fibres thermoplastiques étirées.

18. Produit composite (30) selon la revendication précédente, **caractérisé en ce que** la couverture (22) des fils hybrides (20) est en fibres de carbone.

19. Produit composite (30) selon l'une des revendications 17 à 18, **caractérisé en ce que** les fibres de l'âme (21) sont torsadées ou tressées entre elles.

20. Produit composite (30) selon l'une des revendications 1 à 19 et la revendication 3, **caractérisé en ce que** ladite première couche appartient au groupe comprenant un tissu ou un mat de fibres végétales, de fibres de carbone, de fibres de verre ou de fibres de polymère, une feuille de métal, une feuille d'aluminium, et une feuille de polymère.

21. Produit composite (30) selon l'une des revendications 1 à 12, 16, et 18 à 20, **caractérisé en ce que** l'âme (21) est en lin et la couverture en fibres de carbone.

22. Produit composite (30) selon l'une des revendications 1 à 21, **caractérisé en ce que** ledit fil hybride (20) est présent à hauteur d'au moins 5% en poids de renfort parallèle ou d'au moins 10% en poids de renfort croisé.

23. Procédé de fabrication d'un produit composite à matrice organique (30) et à paroi mince formant une feuille ou une coque tridimensionnelle, dans lequel les étapes suivantes sont mises en oeuvre :
- fabriquer une préforme comprenant des fils, lesdits fils comportant des fils hybrides (20), lesdits fils hybrides (20) comportant une âme (21) dans un premier matériau et une couverture (22) recouvrant l'âme (21), la couverture étant réalisée dans un deuxième matériau, ledit deuxième matériau étant différent du premier matériau,
- imprégner ladite préforme avec une matrice organique,
- appliquer une pression avec une membrane ou un tampon flexible sur un côté en relief de la préforme contre un moule,
- contrôler la température du moule de manière à solidifier ladite matrice organique, de manière à obtenir un produit solidifié dans lequel au moins une face externe forme des nervures (33) créées au moins en partie par lesdits fils hybrides (20) , dans lequel ledit premier matériau présente une masse volumique inférieure à 1500 Kg/m³ et dans lequel ledit deuxième matériau présente un module de Young longitudinal en traction, selon l'axe du fil hybride (20), correspondant au module d'élasticité en traction Et déterminé par la pente de la courbe de contrainte/déformation σ(ε) dans l'intervalle entre les deux déformations ε1 = 0,05 % et ε2 = 0,25 %, supérieur à 25 GPa.

## Patentansprüche

1. Ein Verbundprodukt (30) mit einer organischen Matrix und einer dünnen Wand, die eine dreidimensionale Folie oder Hülle bildet, die durch Fäden verstärkt ist, wobei die Fäden Hybridfäden (20) umfassen, wobei die Hybridfäden (20) einen Kern (21) aus einem ersten Material mit einer Dichte von weniger als 1500 kg/m3 und eine den Kern (21) umgebende Ummantelung (22) aufweisen, wobei die Ummantelung (22) aus einem zweiten Material gebildet ist, das sich vom ersten Material unterscheidet, wobei das zweite Material entlang der Achse des Hybridfadens (20) ein Young Längselastizitätsmodul unter Zugbeanspruchung aufweist, das dem Elastizitätsmodul unter Zugbeanspruchung *E*ₜ entspricht, das durch die Steigung der Spannungs-Dehnungs-Kurve σ(ε) im Bereich zwischen den beiden Dehnungen ε1 = 0,05 % und ε2 = 0,25 % bestimmt wird und größer als 25 GPa ist, und wobei das Produkt mindestens eine gerippte Fläche aufweist, wobei die Rippen (33) mindestens teilweise durch die Hybridfäden (20) erzeugt werden.

2. Das mit Hybridfäden verstärkte Verbundprodukt (30) nach Anspruch 1, aufweisend mindestens eine erste Schicht, wobei die erste Schicht sowohl einen ersten Fadentyp (A) mit einer ersten Dicke als auch einen zweiten Fadentyp (B) mit einer zweiten Dicke umfasst, die größer ist als die erste Dicke, wobei der zweite Fadentyp (B) aus den Hybridfäden (20) gebildet ist.

3. Das mit Hybridfäden verstärkte Verbundprodukt (30) nach Anspruch 1, aufweisend mindestens eine erste Schicht mit einer ersten Dicke, wobei die erste Schicht mit einer zweiten Schicht aus Fäden bedeckt ist, wobei die Fäden der zweiten Schicht die Hybridfäden (20) umfassen, wobei die Hybridfäden (20) beabstandet sind, um eine gerippte Oberfläche zu schaffen.

4. Das Verbundprodukt (30) nach dem vorhergehenden Anspruch, wobei die Hybridfäden (20) in der zweiten Schicht parallel zueinander in nur einer Richtung oder in nur zwei, drei oder vier Richtungen angeordnet sind.

5. Das Verbundprodukt (30) nach Anspruch 3 oder Anspruch 4, wobei die Hybridfäden (20) eine zweite Dicke aufweisen, die größer ist als die erste Dicke der ersten Schicht.

6. Das Verbundprodukt (30) nach einem der Ansprüche 1 bis 5, **dadurch gekennzeichnet, dass** es eine gerippte Seite und eine ebene Seite aufweist.

7. Das Verbundprodukt (30) nach einem der Ansprüche 1 bis 6, **dadurch gekennzeichnet, dass** in jedem Hybridfaden (20) die Ummantelung (22) aus einem oder mehreren Rovings gebildet ist.

8. Das Verbundprodukt (30) nach einem der Ansprüche 1 bis 7, **dadurch gekennzeichnet, dass** in jedem Hybridfaden (20) der Kern (21) des Hybridfadens mit der Ummantelung des Hybridfadens (20) verbunden ist.

9. Das Verbundprodukt (30) nach dem vorhergehenden Anspruch, wobei der Kern (21) der Hybridfäden (20) aus Pflanzenfasern gebildet ist, die aus den Fasern der folgenden Pflanzen stammen: Flachs, Hanf, Sisal, Jute, Abaca, Kenaf, Kokosnuss, Baumwolle, Brennnessel, Ramie, Kapok, Abaca, Henequen, Ananas, Banane, Palme, Holz.

10. Das Verbundprodukt (30) nach Anspruch 9, wobei die Pflanzenfasern des Kerns (21) der Hybridfäden (20) so verdrillt sind, dass der Winkel, den die Außenfasern des Kerns mit der Längsachse des Hybridfadens (20) bilden, zwischen 10° und 45°, vorzugsweise zwischen 12° und 40°, vorzugsweise zwischen 15° und 35°

11. Das Verbundprodukt (30) nach Anspruch 9, wobei die Pflanzenfasern des Kerns (21) der Hybridfäden (20) mit Stärke oder einem anderen natürlichen Bindemittel ummantelt sind.

12. Das Verbundprodukt (30) nach einem der Ansprüche 9 bis 11, wobei die Ummantelung (22) der Hybridfäden (20) aus Kohlenstofffasern gebildet ist.

13. Das Verbundprodukt (30) nach einem der Ansprüche 9 bis 11, wobei die Ummantelung (22) der Hybridfäden (20) aus Pflanzenfasern in Form von Rovings gebildet ist, wobei die Rovings aus ausgerichteten Pflanzenfasern gebildet sind, die einen Winkel von weniger als 5° zur Längsrichtung des Rovings bilden, so dass das Young-Elastizitätsmodul in Längsrichtung der Rovings des mit einer organischen Matrix imprägnierten Rovings, ensprechend dem Zugelastizitätsmodul *E*ₜ, das durch die Steigung der Spannungs-Dehnungs-Kurve σ(ε) im Bereich zwischen den beiden Dehnungen ε1 = 0,05 % und ε2 = 0,25 % bestimmt wird, größer als 30 GPa ist.

14. Das Verbundprodukt (30) nach einem der Ansprüche 1 bis 8, **dadurch gekennzeichnet, dass** der Kern (21) der Hybridfäden (20) aus einem Polymer gebildet ist, wobei das Polymer zu einer Gruppe bestehend aus Poly Polyurethan PU, Polyethylenterephthalat PET, Polymilchsäure PLA, Polyvinylchlorid PVC, Polystyrol PS, Polymethacrylamid PMI und Styrol-Acrylnitril-Copolymer SAN gehört.

15. Das Verbundprodukt (30) nach einem der Ansprüche 1 bis 8 und 14, **dadurch gekennzeichnet, dass** der Kern (21) ein hohler, röhrenförmiger Polymerfaden ist, dessen Wand Löcher (21a) aufweist.

16. Das Verbundprodukt (30) nach einem der Ansprüche 14 bis 15, **dadurch gekennzeichnet, dass** die Ummantelung (22) der Hybridfäden (20) aus Kohlenstofffasern, Glasfasern oder Pflanzenfasern gebildet ist.

17. Verbundprodukt (30) gemäß einem der Ansprüche 1 bis 13, 15 und 16, **dadurch gekennzeichnet, dass** der Kern (21) aus Aramidfasern oder aus gestreckten Polyethylenfasern mit sehr hohem Molekulargewicht UHMPE oder aus gestreckten thermoplastischen Fasern gebildet ist.

18. Das Verbundprodukt (30) nach dem vorstehenden Anspruch, **dadurch gekennzeichnet, dass** die Ummantelung (22) der Hybridfäden (20) aus Kohlenstofffasern gebildet ist.

19. Das Verbundprodukt (30) gemäß einem der Ansprüche 17 bis 18, **dadurch gekennzeichnet, dass** die Fasern des Kerns (21) miteinander verdrillt oder verflochten sind.

20. Das Verbundprodukt (30) nach einem der Ansprüche 1 bis 19 und Anspruch 3, **dadurch gekennzeichnet, dass** die erste Schicht zu einer Gruppe gehört, die ein Gewebe oder eine Matte aus Pflanzenfasern, Kohlenstofffasern, Glasfasern oder Polymerfasern, eine Metallfolie, eine Aluminiumfolie und eine Polymerfolie umfasst.

21. Das Verbundprodukt (30) gemäß einem der Ansprüche 1 bis 12, 16 und 18 bis 20, **dadurch gekennzeichnet, dass** der Kern (21) aus Leinen und die Ummantelung aus Kohlenstofffasern gebildet ist.

22. Das Verbundprodukt (30) gemäß einem der Ansprüche 1 bis 21, **dadurch gekennzeichnet, dass** der Hybridfaden (20) in einer Menge von mindestens 5 Gew.-% als parallele Verstärkung oder mindestens 10 Gew.-% als kreuzweise Verstärkung vorhanden ist.

23. Ein Verfahren zur Herstellung eines Verbundprodukts mit organischer Matrix (30) und dünner Wand, das eine dreidimensionale Folie oder Hülle bildet, wobei die folgenden Schritte durchgeführt werden:
- Herstellen eines Vorformlings, die Fäden umfasst, wobei die Fäden Hybridfäden (20) umfassen, wobei die Hybridfäden (20) einen Kern (21) aus einem ersten Material und eine den Kern (21) bedeckende Hülle (22) aus einem zweiten Material umfassen, wobei sich das zweite Material vom ersten Material unterscheidet,
- Imprägnieren des Vorformlings mit einer organischen Matrix,
- Ausüben von Druck mit einer Membran oder einem flexiblen Stempel auf eine reliefartige Seite des Vorformlings gegen eine Form,
- Steuern der Temperatur der Form, um die organische Matrix zu verfestigen, so dass ein verfestigtes Produkt erhalten wird, bei dem mindestens eine Außenfläche Rippen (33) bildet, die mindestens teilweise durch die Hybridfäden (20) erzeugt werden , wobei das erste Material eine Dichte von weniger als 1500 kg/m³ aufweist und wobei das zweite Material ein Young Längselastizitätsmodul unter Zugbeanspruchung entlang der Achse des Hybridfadens (20) aufweist, das dem Zugelastizitätsmodul Et entspricht, welches durch die Steigung der Spannungs-Dehnungs-Kurve σ(ε) im Bereich zwischen den beiden Dehnungen ε1 = 0,05 % und ε2 = 0,25 % bestimmt wird und größer als 25 GPa ist.

## Claims

1. A thin-walled composite product (30) with an organic matrix forming a sheet or a three-dimensional shell, reinforced by yarns, the yarns comprising hybrid yarns (20), said hybrid yarns (20) comprising a core (21) of a first material having a density of less than 1500 kg/m³ and a sheath (22) covering the core (21), the sheath (22) being made of a second material, said second material being different from the first material, wherein said second material has a longitudinal tensile Young's modulus , along the axis of the hybrid yarn (20), corresponding to the tensile modulus of elasticity Et determined by the slope of the stress-strain curve σ(ε) in the interval between the two deformations ε1 = 0.05% and ε2 = 0.25%, greater than 25 GPa, and wherein said product has at least one ribbed face, said ribs (33) being formed at least in part by the hybrid yarns (20).

2. The composite product (30) reinforced by hybrid yarns according to claim 1, comprising at least a first layer, said first layer comprising both a first type of yarn (A) having a first thickness and a second type of yarn (B) having a second thickness greater than the first thickness, said second type of yarn (B) being constituted by said hybrid yarns (20).

3. The composite product (30) reinforced by hybrid yarns according to claim 1, comprising at least a first layer having a first thickness, said first layer being covered by a second layer of yarns, said yarns of the second layer comprising said hybrid yarns (20), the hybrid yarns (20) being spaced apart to create a ribbed surface.

4. The composite product (30) according to the preceding claim, wherein said hybrid yarns (20) are arranged in the second layer parallel to one another in a single direction or in only two, three or four directions.

5. The composite product (30) according to claim 3 or claim 4, wherein said hybrid yarns (20) have a second thickness greater than the first thickness of the first layer.

6. The composite product (30) according to one of claims 1 to 5, **characterised in that** it comprises a ribbed face and a flat face.

7. The composite product (30) according to one of claims 1 to 6, **characterised in that** in each hybrid yarn (20), said sheath (22) is formed from one or more rovings.

8. The composite product (30) according to any one of claims 1 to 7, **characterised in that** in each hybrid yarn (20), said core (21) of the hybrid yarn is connected to said sheath of the hybrid yarn (20).

9. The composite product (30) according to the preceding claim, wherein the core (21) of the hybrid yarns (20) is formed from plant fibres selected from the fibres of the following plants: flax, hemp, sisal, jute, abaca, kenaf, coconut, cotton, nettle, ramie, kapok, abaca, henequen, pineapple, banana, palm, wood.

10. The composite product (30) according to claim 9, wherein the plant fibres of the core (21) of the hybrid yarns (20) are twisted such that the angle formed by the outer fibres of the core with the longitudinal axis of the hybrid yarn (20) is between 10 and 45°, preferably between 12 and 40°, preferably between 15° and 35°.

11. The composite product (30) according to claim 9, wherein the plant fibres of the core (21) of the hybrid yarns (20) are coated with starch or another natural cement.

12. The composite product (30) according to any one of claims 9 to 11, wherein the sheath (22) of the hybrid yarns (20) is formed from carbon fibers.

13. The composite product (30) according to any one of claims 9 to 11, wherein the covering (22) of the hybrid yarns (20) is formed from plant fibers in the form of rovings, said rovings being made up of aligned plant fibers forming an angle of less than 5° with the longitudinal direction of the roving, such that the Young's modulus in the longitudinal direction of the rovings of the roving impregnated with an organic matrix, corresponds to the tensile modulus of elasticity *E*ₜ determined by the slope of the stress-strain curve σ(ε) in the interval between the two deformations ε1 = 0.05% and ε2 = 0.25%, is greater than 30 GPa.

14. The composite product (30) according to any one of claims 1 to 8, **characterised in that** the core (21) of the hybrid yarns (20) is made of a polymer, said polymer belonging to the group comprising polyurethane (PU), polyethylene terephthalate (PET), polylactic acid (PLA), polyvinyl chloride (PVC), polystyrene (PS), polymethacrylamide (PMI) and styrene-acrylonitrile copolymer (SAN).

15. The composite product (30) according to any one of claims 1 to 8 and 14, **characterised in that** the core (21) is a hollow, tubular polymer yarn, the wall of which has holes (21a).

16. Composite product (30) according to any one of claims 14 to 15, **characterised in that** the sheath (22) of the hybrid yarns (20) is made of carbon fibers, glass fibers or plant fibres.

17. The composite product (30) according to any one of claims 1 to 13, 15 and 16, **characterised in that** the core (21) is made of aramid fibers or of drawn ultrahigh molecular weight polyethylene (UHMPE) fibers or drawn thermoplastic fibers.

18. The composite product (30) according to the preceding claim, **characterised in that** the sheath (22) of the hybrid yarns (20) is made of carbon fibers.

19. The composite product (30) according to one of claims 17 to 18, **characterised in that** the fibres of the core (21) are twisted or braided together.

20. The composite product (30) according to any one of claims 1 to 19 and claim 3, **characterised in that** said first layer belongs to the group comprising a fabric or mat of plant fibers, carbon fibers, glass fibers or polymer fibers, a metal sheet, an aluminum sheet, and a polymer sheet.

21. The composite product (30) according to any one of claims 1 to 12, 16, and 18 to 20, **characterised in that** the core (21) is made of flax and the sheath is made of carbon fibers.

22. The composite product (30) according to any one of claims 1 to 21, **characterised in that** said hybrid yarn (20) is present in an amount of at least 5% by weight of parallel reinforcement or at least 10% by weight of cross-reinforcement.

23. A method for manufacturing a thin-walled organic matrix composite product (30) forming a sheet or a three-dimensional shell, comprising the following steps:
- manufacturing a preform comprising yarns, said yarns comprising hybrid yarns (20), said hybrid yarns (20) comprising a core (21) made of a first material and a sheath (22) covering the core (21), the sheath being made of a second material, said second material being different from the first material,
- impregnating said preform with an organic matrix,
- applying pressure with a membrane or a flexible pad on a raised side of the preform against a mold,
- controlling the temperature of the mold so as to solidify said organic matrix, thereby obtaining a solidified product in which at least one outer face forms ribs (33) created at least in part by said hybrid yarns (20), wherein said first material has a density of less than 1500 kg/m³ and wherein said second material has a longitudinal Young's modulus in tension, along the axis of the hybrid yarn (20), corresponding to the tensile modulus of elasticity *E*ₜ determined by the slope of the stress-strain curve σ(ε) in the interval between the two deformations ε1 = 0.05% and ε2 = 0.25%, greater than 25 GPa.
